(19) Europäisches Patentamt / European Patent Office / Office européen des brevets

(11) **EP 2 701 976 B1**

(12) **EUROPEAN PATENT SPECIFICATION**


(45) Date of publication and mention of the grant of the patent:
**17.06.2015 Bulletin 2015/25**

(21) Application number: **11782264.3**

(22) Date of filing: **28.04.2011**

(51) Int Cl.:
***B64D 31/10*** *(2006.01)* ***G05D 1/00*** *(2006.01)*

(86) International application number:
**PCT/US2011/034322**

(87) International publication number:
**WO 2012/148398 (01.11.2012 Gazette 2012/44)**


(54) **MODIFIED THRUST LIMIT SCHEDULE FOR CONTROL OF THRUST ASYMMETRY**

MODIFIZIERTER SCHUBBEGRENZUNGSPLAN ZUR STEUERUNG VON SCHUBASYMMETRIE

PROGRAMME DE LIMITATION DE POUSSÉE MODIFIÉE POUR LA COMMANDE D'UNE ASYMÉTRIE DE POUSSÉE


(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.03.2014 Bulletin 2014/10**



(73) Proprietor: **The Boeing Company**
**Chicago, IL 60606-2016 (US)**

(72) Inventors:
- **EGGOLD, David, P.**
  **Everett, Washington 98208 (US)**
- **JOHNSON, Eric, W.**
  **Bothell, Washington 98012 (US)**
- **COUEY, Lyle, M.**
  **Kirkland, Washington 98034 (US)**
- **CORONA, Erick, G.**
  **Seattle, Washington 98117 (US)**

(74) Representative: **Witte, Weller & Partner Patentanwälte mbB**
**Königstrasse 5**
**70173 Stuttgart (DE)**



(56) References cited:
**WO-A1-2010/041939** **US-A- 5 927 655**
**US-A1- 2008 243 315**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



EP 2 701 976 B1



Printed by Jouve, 75001 PARIS (FR)

## Description

### BACKGROUND

The present disclosure relates generally to improving automated control of a multi-engine aircraft experiencing engine thrust asymmetry.

Large airplanes have a wide range of operating weights. Engines are sized to achieve desired performance at heavy weights. This causes the airplane to have much more power at light operating weights than is needed to achieve desired performance at those weights.

Landing speeds are set to be the greater of a wing lift-limited speed or the engine-out minimum control speed. The lift-limited speed is required to be at least 23% greater than stall speed and, therefore, is directly a function of airplane weight. A large airplane with very little payload and fuel can land at a much slower speed than that same airplane with a large payload. The engine-out minimum control speed is determined as the airspeed where an engine failure can be controlled with full thrust on the operating engines, full rudder deflection and not more than 5 degrees of bank angle. This speed is not strongly dependent on weight but it depends strongly on the maximum engine thrust.

In some airplanes, the combination of high-thrust engines, the aerodynamic directional control power available on the airplane and light weights for landing can cause landing speeds to be limited by full-thrust minimum control speeds rather than by the lift limitations of the wings.

Reducing this minimum control speed restriction allows such an airplane to land at lower speeds when it operates at light weight. The benefits of this are a shorter landing distance, less tendency to float prior to or after touchdown, less brake wear, reduced approach noise and improved landing pitch attitude.

Existing solutions consist of increased landing speed, larger vertical tail and rudder and reduced engine thrust for all landing and go-around conditions.

Larger vertical tail and rudder have the disadvantages of greater weight and drag.

Engines with sophisticated control systems can implement separate engine thrust limit schedules for different flight phases. Therefore go-around thrust can be set to lower thrust levels than used for takeoff, climb or maximum continuous thrust. Reducing the engine thrust limit schedule for landing and go-around can be used to reduce or eliminate the landing speed limitation imposed by engine-out control requirements without affecting airplane performance in other phases of flight. However, these schedules scale thrust down over the whole operating speed range. Scaling down thrust to achieve the desired engine-out control speeds for the desired light-weight landing speeds would also mean lower thrust for heavy-weight conditions where climb performance requirements may dictate that this would not be acceptable. US 2008/243315 A1 which is considered to be the closest prior art, discloses a method and device for assisting in a management of an engine failure on a multi-engine aircraft. Thrust produced by an engine of a multi-engine airplane operating with thrust asymmetry is limited. A first thrust limit schedule for the engine is calculated based at least on information about the flight phase. The engine is controlled so that the thrust produced by the engine does not exceed the engine thrust limit.

There is a need for a solution that is free of the drawbacks of existing solutions.

### SUMMARY

Disclosed herein is a flight control and engine control function for a multi-engine aircraft which automatically controls maximum thrust on the operating engine to a value lower than the nominal thrust limit schedule in the event of loss of thrust on another engine.

The magnitude of a thrust asymmetry on a multi-engine aircraft is controlled in the event of an engine failure so that the asymmetry will be no larger than that which can be controlled by aerodynamic controls over a range of airspeeds such that the minimum airspeed for control of a thrust asymmetry can be reduced. In particular, the maximum engine thrust of the operating engine is controlled (limited) such that the resulting thrust asymmetry can be controlled at airspeeds lower than would otherwise be the case. The decrease in engine-out minimum control speed can remove the restriction on landing speeds that would otherwise be caused by engine-out minimum control speed.

In accordance with the embodiments disclosed herein, engine thrust is controlled in the event of a thrust asymmetry to reduce the airspeed necessary to control a thrust asymmetry. This is done by defining a reduced thrust limit schedule that is less than the engine's normal operating capability (i.e., the reduced thrust limit schedule controls maximum thrust on the operating engine to a value lower than the nominal thrust limit' schedule).

A reduced thrust limit schedule in accordance with a preferred embodiment is a function of airspeed, detected thrust asymmetry, flight phase, and airplane conditions (such as flap angle and airplane weight) that are significant in determining minimum airplane operating airspeed and airplane stall speed.

More specifically, the reduced thrust limit schedule may be a function of measured or estimated thrust asymmetry, so that the reduced schedule is used only in conditions of large thrust asymmetry where engine-out control is a concern. This makes full engine thrust available for symmetric thrust conditions. Because the thrust limit schedule is a function of airplane conditions, the schedule can be tailored so that it meets the engine-out control requirements at the operating speed for the given condition, but does not reduce thrust more than necessary. The thrust limit schedule is a function of flight phase, so that thrust is reduced differently for takeoff and landing phases.

The thrust limit schedule can be tuned based on flight test knowledge of the airplane's aerodynamic characteristics. Optionally, there may be other minor schedule changes for better optimization across all the flight conditions and maneuvers that are evaluated.

In accordance with a further aspect, magnitude limits, rate limits and filters are applied to the reduced thrust limit schedule to protect for erroneous inputs to the calculations and filter out high-frequency variations in the input parameters. This creates a lower-frequency thrust command that the engine is capable of responding to.

The reduced thrust limit schedule, calculated in units of thrust, is converted into the thrust control parameter used by the engine controller, such as N1, engine pressure ratio, torque or manifold pressure. The engine controller compares the reduced thrust limit schedule with the currently commanded thrust or power and controls the engine to the lower of the thrust limit schedule value or the currently commanded thrust or power.

The functionality as described above reduces the airspeed for which an engine failure can be controlled without any weight or drag that would be required if the same controllability airspeed were achieved with aerodynamic controls. This functionality enables lower approach speeds for the same airplane weight and a reduced operating empty weight to retain the same approach speed.

This system reduces maximum thrust only following an engine failure and only for specific flight conditions, unlike an existing solution of scaled-down thrust capability for all speeds, which takes away climb performance with all engines operating and for conditions where there is excess aerodynamic control capability for an engine failure. Reducing maximum thrust for just certain airspeeds but independent of whether an engine has failed or not also results in less climb performance with all engines operating. It is better to have more climb performance, provided it is controllable, to more easily handle rare events such as windshear.

The solution disclosed herein avoids the disadvantages of the existing solutions while still providing the desired characteristics of sufficient engine-out control capability and sufficient climb capability with an engine failure. These advantages are possible for airplanes that do not need the full engine thrust capability following an engine failure to achieve the desired climb capability at light weight.

The invention can involve a method of limiting thrust produced by an engine of a multi-engine airplane operating with thrust asymmetry that may include calculating first, second and third thrust limit-schedules for the engine based at least on information about the flight phase, flap position and weight of the airplane; determining successive first engine thrust limits over time as a function of said first thrust limit schedule and a variable dynamic pressure; estimating successive yawing moment coefficients due to a variable thrust asymmetry; determining successive second engine thrust limits over time as a function of at least said second thrust limit schedule and absolute values of said successive estimated yawing moment coefficients; determining successive third engine thrust limits over time as a function of at least said third thrust limit schedule and said absolute values of said successive estimated yawing moment coefficients; for each successive set of first, second and third engine thrust limits corresponding to a respective time, selecting the one of said first, second and third engine thrust limits having a middle value, thereby producing successive selected engine thrust limits; and controlling the engine so that the thrust produced by the engine does not exceed successive applied engine thrust limits derived from said successive selected engine thrust limits. The first engine thrust limits may be selected for engine failure conditions that produce a thrust asymmetry in a range, said second engine thrust limits are selected for a transition from a condition where neither engine has thrust limited to the condition where one engine is failed and the other engine thrust is limited, and said third engine thrust limits are selected for engine failure conditions that produce a thrust asymmetry greater than an upper limit of said range. The method may also include passing said successive selected engine thrust limits subject to upper and lower limits, said upper limit being a value that slightly exceeds a thrust capability of the engine, and said lower limit being a minimum value that is needed to provide the desired control capability, the result of said passing step being an output signal representing successive unfiltered engine thrust limits. The method may also include filtering said output signal to remove high-frequency content that the engine is not capable of responding to, the result of said filtering operation being a filtered output signal. The method may also include comprising rate limiting to limit a rate of change to ensure that said filtered output signal does not increase faster than a specified positive rate limit, wherein said positive rate limit is set equal to the engine's thrust acceleration capability. The rate limiting may further limit the rate of change to ensure that said filtered output signal does not decrease faster than a specified negative rate limit, wherein when the thrust limit is at a value above the maximum thrust that the engine can produce, said negative rate limit is greater that the engine's thrust deceleration capability, and wherein the result of said rate limiting is said successive applied engine thrust limits. The calculating of the first thrust limit schedule may include (a) calculating values of lift and yawing moment coefficients as a function of at least airplane flap position and flight phase information; and (b) calculating a dynamic pressure as a function of at least a lift coefficient value calculated in step (a) and a weight of the airplane. Calculating said second and third thrust limit schedule comprises estimating a yawing moment coefficient due to asymmetric thrust. The controlling of the engine may include calculating values of a thrust control parameter that will cause the engine to produce thrusts equal to said selected engine thrust limits using air data information. The method as recited in claim 1, comprising computing logic signals that control the engine to produce thrust no greater than said selected engine thrust limits when said selected thrust limits are less than the engine's thrust capability, said airplane is in the air and the sensors used to provide data for calculations are declared valid.

The invention can involve a system for limiting thrust produced by an engine of a multi-engine airplane operating with thrust asymmetry, comprising: a computer system and an engine controller, wherein said computer system is programmed to execute the following operations: calculating first, second and third thrust limit schedules for the engine based at least on information about the flight phase, flap position and weight of the airplane; determining successive first engine thrust limits over time as a function of said first thrust limit schedule and a variable dynamic pressure; estimating successive yawing moment coefficients due to a variable thrust asymmetry; determining successive second engine thrust limits over time as a function of at least said second thrust limit schedule and absolute values of said successive estimated yawing moment coefficients; determining successive third engine thrust limits over time as a function of at least said third thrust limit schedule and said absolute values of said successive estimated yawing moment coefficients; and for each successive set of first, second and third engine thrust limits corresponding to a respective time, selecting the one of said first, second and third engine thrust limits having a middle value, thereby producing successive selected engine thrust limits, and wherein said engine controller is programmed to control the engine so that the thrust produced by the engine does not exceed successive applied engine thrust limits derived from said successive selected engine thrust limits. The first engine thrust limits may be selected for engine failure conditions that produce a thrust asymmetry in a range, said second engine thrust limits are selected for a transition from a condition where neither engine has thrust limited to the condition where one engine is failed and the other engine thrust is limited, and said third engine thrust limits are selected for engine failure conditions that produce a thrust asymmetry greater than an upper limit of said range. The computer system may be further programmed to pass said successive selected engine thrust limits subject to upper and lower limits, said upper limit being a value that slightly exceeds a thrust capability of the engine, and said lower limit being a minimum value that is needed to provide the desired control capability, the result of said passing step being an output signal representing successive unfiltered engine thrust limits. The computer system may be further programmed to filter said output signal to remove high-frequency content that the engine is not capable of responding to, the result of said filtering operation being a filtered output signal. The computer system may be further programmed to limit a rate of change to ensure that said filtered output signal does not increase faster than a specified positive rate limit, wherein said positive rate limit is set equal to the engine's thrust acceleration capability. The computer system may be further programmed to limit a rate of change to ensure that said filtered output signal does not decrease faster than a specified negative rate limit, wherein when the thrust limit is at a value above the maximum thrust that the engine can produce, said negative rate limit is greater that the engine's thrust deceleration capability, and wherein the result of said rate limiting is said successive applied engine thrust limits. The calculating of the first thrust limit schedule may include (a) calculating values of lift and yawing moment coefficients as a function of at least airplane flap position and flight phase information; and (b) calculating a dynamic pressure as a function of at least a lift coefficient value calculated in step (a) and a weight of the airplane. The calculating of the second and third thrust limit schedule may include estimating a yawing moment coefficient due to asymmetric thrust. The controlling the engine may include calculating values of a thrust control parameter that will cause the engine to produce thrusts equal to said selected engine thrust limits using air data information. The computer system may be further programmed to compute logic signals that control the engine to produce thrust no greater than said selected engine thrust limits when said selected thrust limits are less than the engine's thrust capability, said airplane is in the air and the sensors used to provide data for calculations are declared valid.

The above-described subject matter may also be implemented in various other embodiments without departing from the scope of the appended claims. These and various other features will be apparent from a reading of the following Detailed Description and a review of the associated drawings.

**BRIEF DESCRIPTION OF THE DRAWINGS**

FIG. 1 is a high-level block diagram showing components of a flight control and engine control system for a multi-engine aircraft which automatically controls maximum thrust on the operating engine to a value lower than the nominal thrust limit schedule in the event of loss of thrust on another engine.

FIGS. 2A through 2E are graphs which shows examples for the form of a modified thrust limit schedule in accordance with various embodiments.

FIG. 3 is a block diagram showing components of a flight control and engine control system for a multi-engine aircraft which automatically controls maximum thrust on the operating engine to a value lower than the nominal thrust limit schedule in the event of loss of thrust on another engine in accordance with one embodiment.

FIG. 4 is a block diagram showing one embodiment of the q-based thrust limit function depicted in FIG. 3.

FIG. 5 is a block diagram showing one embodiment of the lower Cn-based thrust limit function depicted in FIG. 3.

FIG. 6 is a block diagram showing one embodiment of the upper Cn-based thrust limit function depicted in FIG. 3.

FIG. 7 is a block diagram showing respective embodiments of the thrust limit selection and filter and limit functions depicted in FIG. 3.

FIG. 8 is a block diagram showing respective embodiments of the left and right engine enable logic and thrust limits functions depicted in FIG. 3.

FIG. 9 is a block diagram showing one embodiment of the engine controllers depicted in FIG. 3.

Reference will hereinafter be made to the drawings in which similar elements in different drawings bear the same reference numerals.

## DETAILED DESCRIPTION

The systems disclosed herein provide a variable schedule for maximum engine thrust on only one engine, which is applied during conditions of large thrust asymmetry at light weight in order to improve light-weight landing operation (i.e. reduced approach speed) and to limit the maximum thrust asymmetry. This functionality is implemented with high-integrity signals and computing, without using engine sensors to detect a thrust asymmetry, so that the function complies with all CFR/CS Part 25 regulations.

In accordance with the embodiments disclosed herein, engine thrust is controlled in the event of a thrust asymmetry to reduce the airspeed necessary to control a thrust asymmetry. This is done by defining a reduced thrust limit schedule that is less than the engine's normal operating capability (i.e., the reduced thrust limit schedule controls maximum thrust on the operating engine to a value lower than the nominal thrust limit schedule).

A reduced thrust limit schedule in accordance with a preferred embodiment is a function of airspeed, detected thrust asymmetry, flight phase, and airplane conditions (such as flap angle and airplane weight) that are significant in determining minimum airplane operating airspeed and airplane stall speed.

In accordance with one embodiment, an airspeed-based schedule is combined with a thrust asymmetry-based schedule by using the higher of the two schedules. In accordance with another embodiment, the overall thrust limit schedule may be a combination of an airspeed-based schedule and two thrust asymmetry-based schedules by using the mid-value of the three schedules.

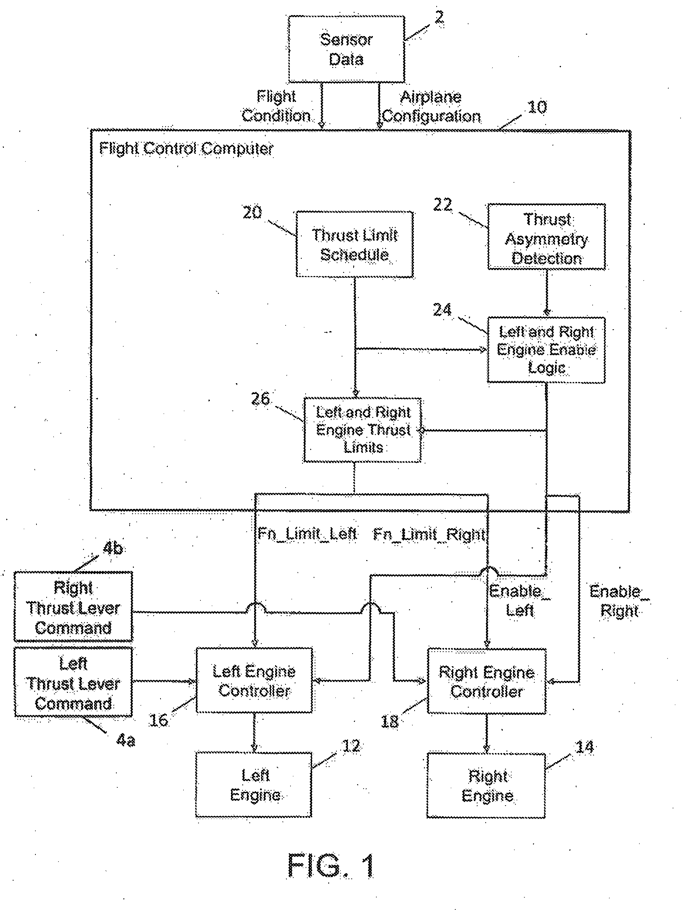

FIG. 1 shows components of a flight control and engine control system for a multi-engine aircraft which automatically controls maximum thrust on the operating engine to a value lower than the nominal thrust limit schedule in the event of loss of thrust on another engine. The system creates a modified thrust limit schedule for control of thrust asymmetry. This system comprises a set of sensors (not shown) on an airplane; a flight control computer 10, and engine controllers 16, 18. The sensors pass data 2 to the flight control computer 10, which uses that sensor data to compute thrust limit schedules and then output thrust limits (i.e., Fn_Limit_Left and Fn_Limit_Right) derived from those schedules to the left and right engine controllers 16, 18. The flight control computer further computes logic signals (i.e., Enable_Left and Enable_Right) that indicate if the thrust limits should be applied in the engine controllers. The engine controller controlling the higher-thrust engine receives the corresponding thrust limit and logic signal and modifies the commanded engine thrust in accordance with the received thrust limit if certain conditions exist. Each engine controller also receives a respective thrust lever command from the left and right thrust levers 4a and 4b. These commands may be due to the pilot interaction with the thrust levers or the commands from an autothrottle system. Each engine controller uses a thrust lever schedule to convert the respective thrust lever command to a command in the units of the thrust control parameter.

In one embodiment, the flight control computer 10 uses the sensor data 2 to calculate thrust limit schedules and logic signals for each of the airplane's engines 12, 14. However, these functions may be implemented in other parts of an airplane's flight control or engine control systems.

The sensors and systems that provide sensor data 2 to the flight control computer 10 use existing technology and methods. The sensor data used in the systems disclosed herein is commonly available on airplanes with electronic flight control systems.

Still referring to FIG. 1, flight control computer 10 contains the functions of calculating thrust limit schedules (block 20), thrust asymmetry detection (block 22), left and right engine enable logic (block 24), and left and right engine thrust limits (block 26). All of these functions are preferably implemented in software running on the flight control computer. The simplest method for detecting a thrust asymmetry would be to use engine sensors to detect if the engine has failed or the engines are producing a high thrust asymmetry, and then set a logical value to signal when a large thrust asymmetry has been detected. If this method was used, it may be necessary to employ logic that monitors several engine parameters so that the true state of engine thrust can be reliably determined, since there are engine failure modes that can invalidate the proportional relationship between the engine parameters and engine thrust.

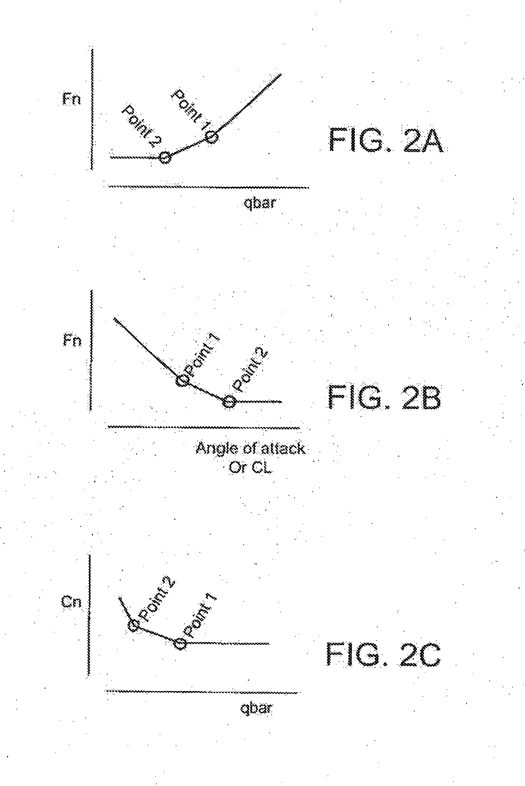

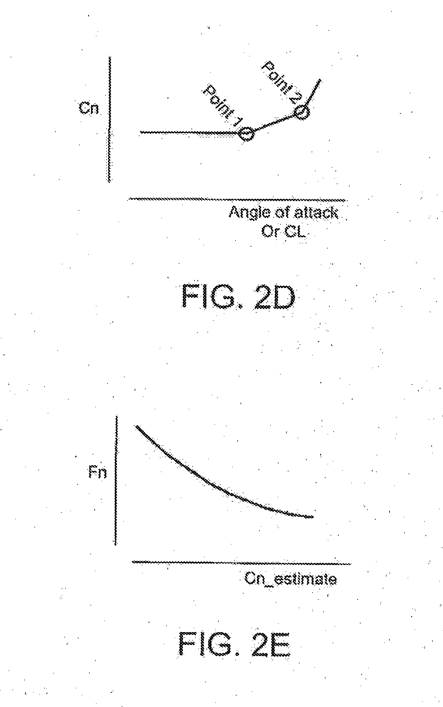

The thrust limit schedule calculation function 20 uses airplane configuration and flight condition information to calculate a modified thrust limit schedule that is to be applied to the higher-thrust engine in the event of a large thrust asymmetry. Airplane configuration information may include airplane weight, flap angle, airplane phase of flight or other terms that differentiate the maximum magnitude of thrust asymmetry to be scheduled for a given flight condition. The flight condition information may include airspeed, dynamic pressure, angle of attack or other terms that are indicative of the airspeed of the aircraft for the given airplane configuration. The modified thrust limit schedule may be calculated in terms of thrust Fn or thrust coefficient Cn or some other term that is proportional to the thrust asymmetry experienced by the airplane when one engine has failed and the remaining engine is controlled to the thrust defined by this modified thrust limit schedule. FIGS. 2A through 2E show examples for the form of the modified thrust limit schedule.

The preferred embodiment disclosed below applies to a two-engine airplane with engines positioned symmetrically on the left and right side of the airplane. However, the principles and methods disclosed herein can be applied to airplanes with three, four or more engines.

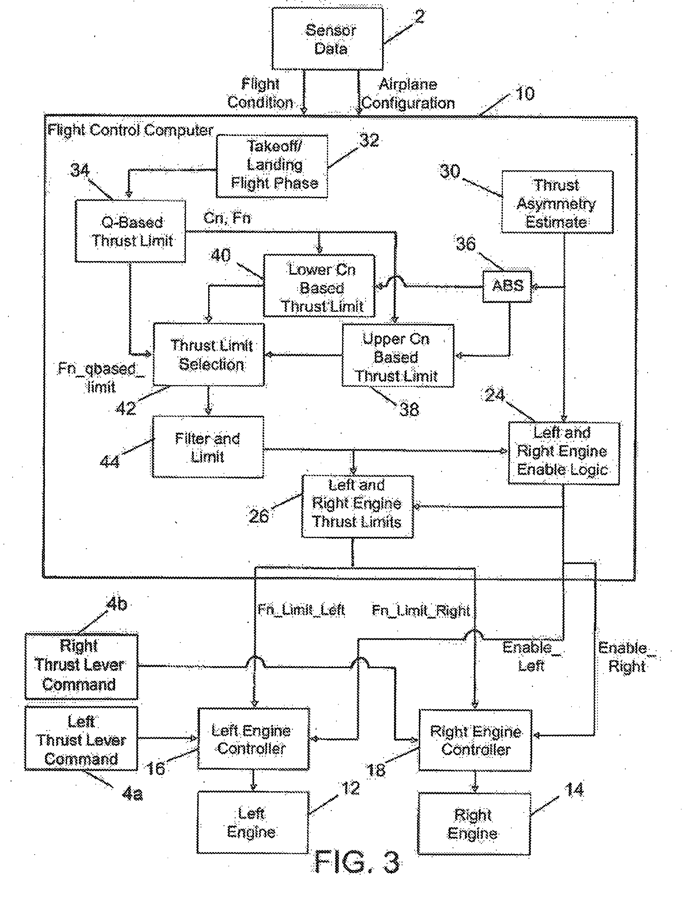

FIG. 3 shows the preferred embodiment in more detail. Sensor data 2 are used to make a determination 32 of takeoff or landing flight phase. This information, along with airplane configuration and flight condition information, is used by the flight control computer to calculate three thrust limits in units of pounds of thrust: a dynamic pressure-based thrust limit (referred to as q-based thrust limit) 34, an upper Cn-based thrust limit 38 and a lower Cn-based thrust limit 40. The two Cn-based thrust limits 38, 40 use the absolute value 36 of the output of the thrust asymmetry estimate function 30, which will be described later. These.three limits are sent to the thrust limit selection function 42 to select the appropriate limit to apply. The output is a single thrust limit in units of pounds of thrust. This is then fed to the filter and limit function 44, where the selected thrust limit is, smoothed and limited to specific upper and lower bounds. The output (named Fn_limit) is then fed to the left and right engine enable logic function 24 and the left and right engine thrust limits function 26. The left and right engine enable logic function 24 determines which, if any, engine should receive the modified thrust limit. The logic allows only one of two engines to receive and act on the modified thrust limit and then only in the case of a suffciently large engine thrust asymmetry. Other aspects of the enable logic 24 may include inhibits on using the modified thrust limit while the airplane is on the ground and when necessary signals are declared invalid. The outputs are logic flags for each engine that are passed to the left and right engine thrust limit function 26 as well as to each engine controller 16, 18. These flags determine which engine is enabled to use the thrust limit to control the engine's maximum commandable thrust. The left and right engine thrust limits function 26 creates outputs of separate thrust limits to each engine. The engine for which the thrust limit has been enabled receives a thrust limit that equals the calculated thrust limit from the filter and limit function. The other engine receives a default value that is greater than the thrust capability of the engine.

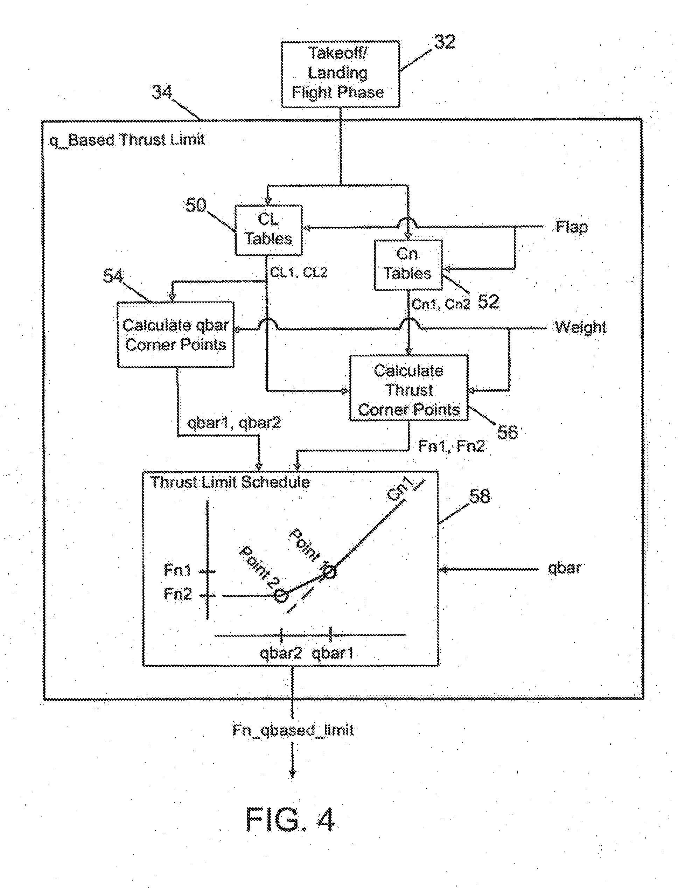

FIG. 4 shows the q-based thrust limit function 34 in more detail. Airplane flap position and flight phase information 32 are used to determine lift coefficient (CL) and yawing moment coefficient (Cn) values for the q-based thrust limit. Lift coefficient values CL1 and CL2 are retrieved from a table 50 of CL values, while yawing moment coefficient values Cn1 and Cn2 are retrieved from a table 52 of Cn values. The values CL1, CL2, Cn1 and Cn2 are used to define Points 1 and 2 in the thrust limit schedule 58. More specifically, the values CL1, CL2 are used along with airplane weight to calculate the dynamic pressure (i.e., qbar1 and qbar2) for Points 1 and 2 of the thrust limit schedule 58. The values CL1, CL2, Cn1 and Cn2 are used along with airplane weight to calculate the thrust values Fn1 and Fn2 for Points 1 and 2 of thrust limit schedule 58. Although this embodiment uses two separate points, implementations could be made with one, three or more points. The resulting thrust limit schedule is shown in block 58.

The thrust limit schedule 58 of Fn versus qbar in FIG. 4 shows the output of the equation for Fn_qbased_limit as a solid line. The dashed line shows the relationship of Fn versus qbar for a constant value of Cn equal to Cn1. "qbar1" marks a value of qbar where Cn1 creates the thrust equal to Fn1.

The relationship of Cn, Fn and qbar is:

$$Fn = Cn * qbar * Wing_area * Wing_span / engine_lateral_location$$

where qbar is calculated from CL and airplane weight:

$$qbar = Weight / (CL*Wing_area)$$

The thrust limit schedule 58 defines the output of the q-based thrust limit (Fn_qbased_limit) as a function of airplane dynamic pressure (qbar). For qbar_greater than qbar1, Fn_qbased_limit is calculated by:

$$Fn_qbased_limit = qbar * (Fn1/qbar1)$$

For qbar between qbar1 and qbar2, Fn_qbased_limit is interpolated between Points 1 and 2 on the schedule. For qbar less than qbar2, Fn_qbased_limit is held constant at the value of Fn2.

Points 1 and 2 reflect certain design choices for this system. These points define the magnitude of the thrust asymmetry that the designer chooses to schedule relative to airplane takeoff and/or landing airspeeds. By implementing this thrust limit schedule where the dynamic pressure for these points is specified by lift coefficient and where the thrust value for these points is specified by thrust asymmetry yawing moment coefficient, the schedule results in a thrust asymmetry that is controlled to have a consistent effect on the airplane for similar operating condition, regardless of airplane weight. Therefore, over the range of airspeeds where this schedule controls the magnitude of the thrust asymmetry, the airplane uses the same amount of aerodynamic control deflections to control the thrust asymmetry regardless of weight when operating at the same margin in dynamic pressure relative to the airplane's scheduled takeoff and/or landing airspeeds.

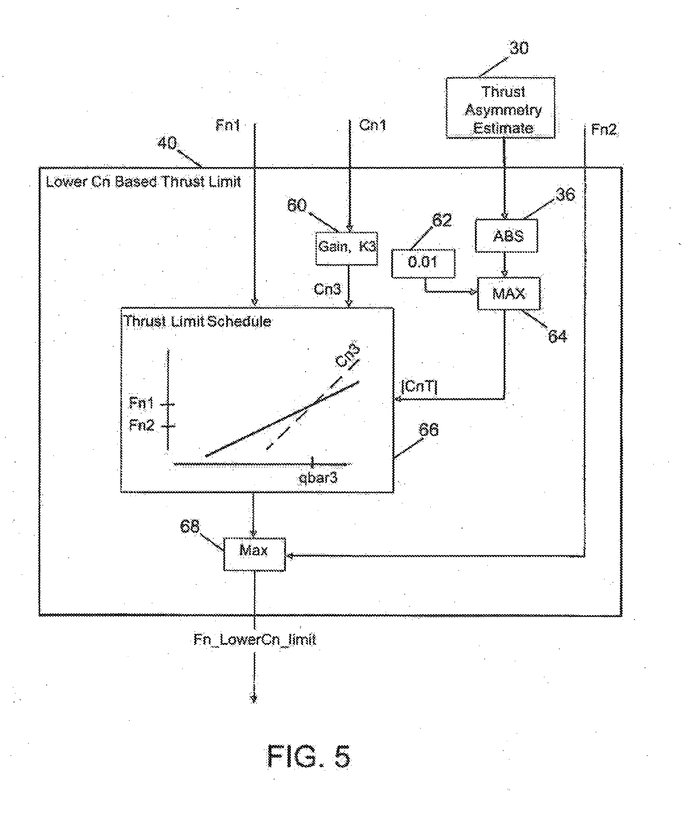

FIG. 5 shows the lower Cn-based thrust limit function 40. This limit is the lower of two Cn-based limits. Inputs to this function include quantities calculated in the q-based thrust limit function: Cn1, Fn1 and Fn2. In the lower Cn-based thrust limit function 40, Cn1 is modified by a gain (block 60) of 0.6 to calculate the value Cn3. This function also receives an input from the thrust asymmetry estimate function 30, which provides an estimate of the yawing moment coefficient due to asymmetric thrust (CnT). [One known method for calculating the yawing moment coefficient due to asymmetric thrust is described in the Appendix hereto. Alternatively, the magnitude of the thrust asymmetry could come from engine instrumentation.] The yawing moment coefficient due to asymmetric thrust is sent through an absolute value function 36 to pass a value that has only a positive magnitude. Next the yawing moment coefficient is sent to a maximum select function 64 which outputs a value CnT that is the greater of the inputted yawing moment coefficient or a constant value (block 62 in FIG. 5) near zero such as 0.01. This step is needed because the next use of this signal is in the denominator of an equation and passing a value of zero would cause a division by zero.

The thrust limit schedule 66 of Fn versus qbar in FIG. 5 shows the output of the equation for Fn_Cn_limit as a solid line. The dashed line shows the relationship of Fn versus qbar for a constant value of Cn equal to Cn3. Fn1 and Fn2 mark two values of Fn that are the same as in FIG. 4. "qbar3" marks a value of qbar where Cn3 creates the thrust equal to Fn1.

The flight control computer uses the inputted quantities to calculate a thrust limit using the following equation:

$$Fn_LowerCn_limit = Fn1*(Cn3/|CnT|)$$

This calculation is performed using the thrust limit schedule 66 shown in FIG. 5. The result of the calculation is then sent to a maximum select function 68 which outputs the greater of the thrust limit or the quantity Fn2. This is used so that the output of the lower Cn-based thrust limit function 40 has a minimum value equal to that of the q-based thrust limit function (block 34 in FIG. 4). This minimum value of Fn2 is used so that no matter what inputted flight condition information is used by the thrust limit functions, the output of this function will be no lower than that determined only by weight and airplane configuration information as is shown in the calculation of Fn2 in FIG. 4.

The lower Cn-based thrust limit serves the purpose of providing a smooth transition for the final thrust limit from a condition where neither engine has thrust limited to the condition where one engine is failed and the other engine thrust is limited. The lower Cn-based thrust limit will have a very large value when the airplane thrust asymmetry is near zero and will have a value lower than the q-based thrust limit when the operating engine thrust is limited by the q-based thrust limit.

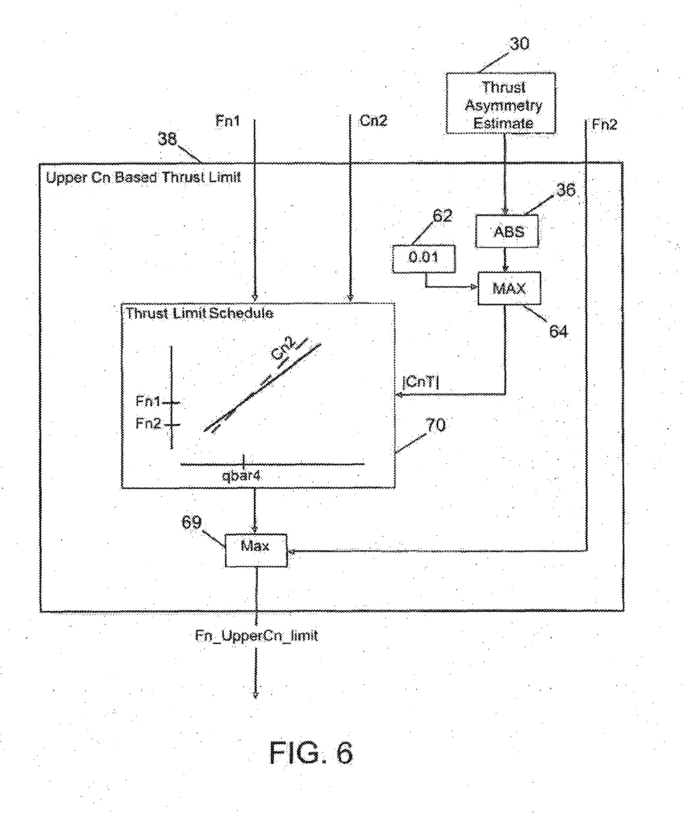

The upper Cn-based thrust limit function 38 (see FIG. 6) is very similar to the lower Cn-based thrust limit function. Inputs to function 38 include quantities calculated in the q-based thrust limit function: Cn2, Fn1 and Fn2. The thrust limit schedule 70 of Fn versus qbar in FIG. 6 shows the output of the equation for Fn_Cn_limit as a solid line. The dashed line shows the relationship of Fn versus qbar for a constant value of Cn equal to Cn2. Fn1 and Fn2. mark two values of Fn that are the same as in FIGS. 4 and 5. "qbar4" marks a value of qbar where Cn2 creates the thrust equal to Fn1.

The processing of the signal from the thrust asymmetry estimate function 30 is the same as in the lower Cn-based thrust limit function. The value Cn2 is used to compute the Cn-based thrust upper Limit using the following equation:

$$Fn_UpperCn_limit = Fn1*[(Cn2/|CnT| - 1)*K_ul + 1]$$

where K_ul may have a value of 4. This calculation is then sent to a maximum select function 69 which outputs the greater of the thrust limit or the quantity Fn2.

The upper Cn-based thrust limit serves the purpose of providing an alternate method of setting the thrust limit if the effect of the engine failure causes a larger thrust asymmetry than is assumed in setting the schedule for the q-based thrust limit. The selection of the q-based limit assumes that the amount of drag caused by the failed engine is known such that by setting the operating engine to a known thrust value, total thrust asymmetry is known and set to a desired value. There are several cases in which this assumption would be invalidated. One is if the engine fails in a different way, such as the propellers do not move to the feathered position or the thrust reverser erroneously deploys. The other is if airspeed is erroneous, but not detected as being invalid, causing the q-based limit to be too high. In these cases, the upper Cn limit can calculate a limit less than the q-based limit and provide the limiting value for the engine. But since the q-based limit is not designed for these conditions, it is appropriate and useful to set a thrust limit less than the q-based limit.

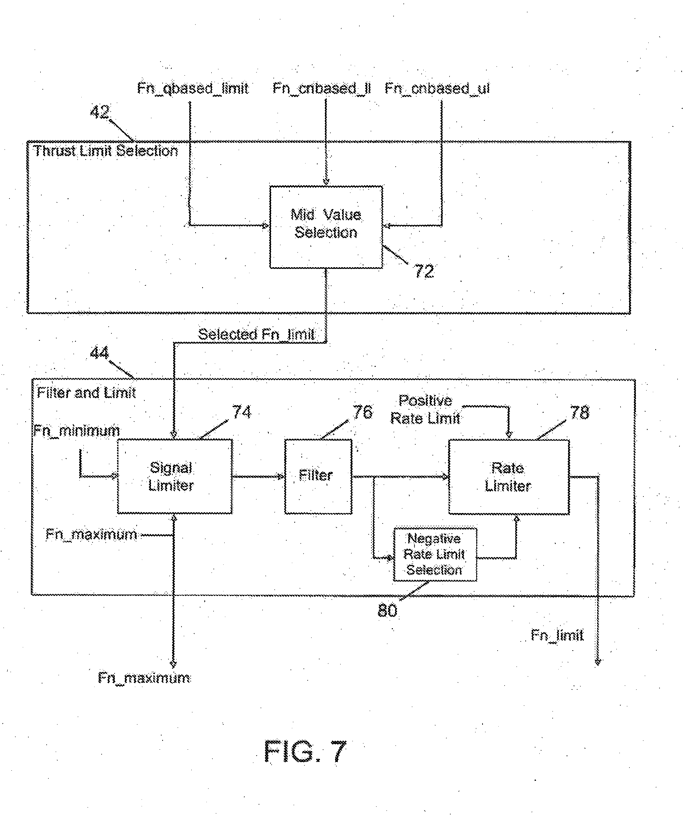

With three separate thrust limits calculated, the thrust limit selection function 42 (see FIG. 7) selects a single value from among them by selecting the limit that has the middle value of the three. An example of how this mid-value selection 72 works is as follows. When an airplane is flying with symmetric thrust, the thrust asymmetry estimate CnT will be roughly zero. The equations for the Cn-based thrust limits show that the value of those limits may be 2 or more times greater than Fn1 due to the minimum value of |CnT| being much smaller than either Cn2 or Cn3. Both of the Cn-based thrust limits will be greater than the q-based thrust limit. In this case, the middle value of the three limits will be the lower Cn-based thrust limit. With symmetric thrust, this limit will be greater than the thrust capability of the engine. For a large thrust asymmetry in an airspeed range where the q-based thrust limit is less than the engine thrust capability, both Cn-based thrust limits will be lower than the symmetric thrust case. For the engine failure conditions for which the q-based schedule is designed to provide its benefit, the q-based thrust limit will be the middle value of the three thrust limits.

Still referring to FIG. 7, the selected thrust limit (Fn_limit) is then sent through the filter and limit function 44. The signal limiter function 74 passes the input signal through to the output, subject to a lower limit Fn_minimum and an upper limit Fn_maximum. These lower and upper limits set the boundaries for the thrust limit that can be passed from the flight control computer to the engine controllers. The upper limit Fn_maximum is set to a value that slightly exceeds the thrust capability of one engine. The lower limit Fn_minimum is set to the minimum value that is needed to provide the desired control capability using the method disclosed, herein. The output of the signal limiter 74 is then passed through a filter 76 to remove high-frequency content that the engine is not capable of responding to. Next, the output of the filter function 76 is passed through the rate limiter function 78 which ensures that the output does not change faster than the specified positive and negative rate limits. The positive rate limit is set equal to the engine's thrust acceleration capability. It is important that an engine responds quickly to reduce thrust in the event of an engine failure. Therefore the negative rate limit selection function 80 sets a large negative rate limit, one much greater than the engine deceleration capability, when the input to the rate limiter 78 is between Fn_maximum and a value in the range of the q-based thrust limit. Therefore, when the thrust limit is at a value above the maximum thrust that the engine can produce, it is allowed to decrease rapidly to thrust levels that the engine will respond to. Once the thrust limit is at a value where the engine will respond to it, the negative rate limit is set to the thrust deceleration capability of the engine.

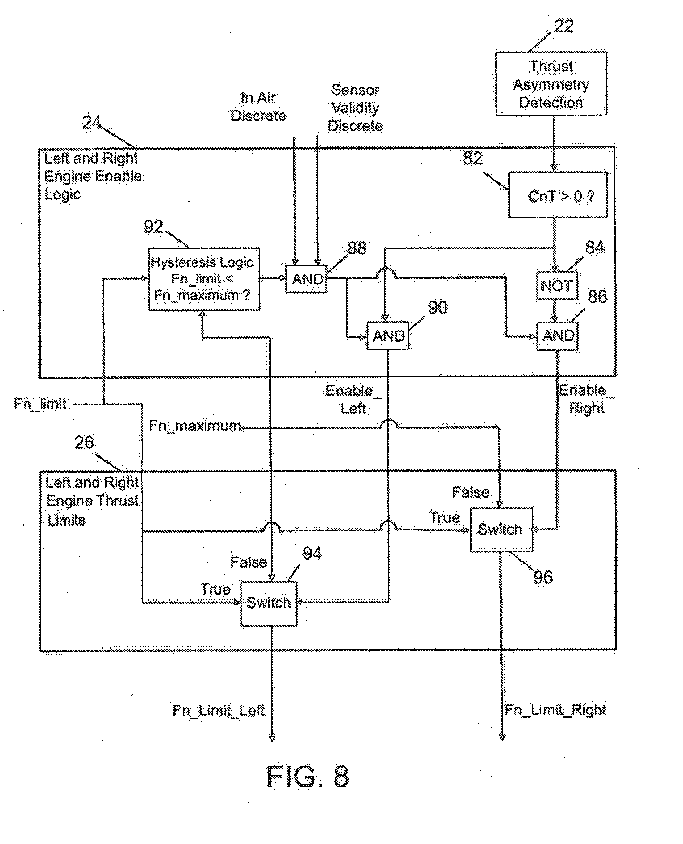

The output Fn_limit from the filter and limit function 44 (shown in FIG. 7) is inputted to the left and right engine enable logic function 24 and the left and right engine thrust limits function 26, shown in FIG. 8. The left and right engine enable logic function 24 computes logic signals, Enable_Left and Enable_Right, that are used to control when each engine is to be controlled to its thrust limit. The values of Fn_limit and Fn_maximum are compared by a hysteresis logic function 92. The output is a logic signal that is True if Fn_limit is less than Fn_maximum by a small margin. The output remains True until Fn_limit is greater than Fn_maximum by a small margin. When the output of the hysteresis logic function 92 is True, it means that the value of Fn_limit is in a range where engine thrust of one engine may need to be limited to less than the engine's thrust capability. When the output of the hysteresis logic function 92 is False, this means that the value of Fn_limit is too high to limit the thrust of either engine. The output of the hysteresis logic function 92 is inputted to an AND function 88, along with a first discrete signal which is True when the airplane is in the air and a second discrete signal which is True when the sensors used in the calculations are declared valid. The output of AND function 88 is True only if all the inputs are True. This ensures that the output is True only when the airplane is in the air and the sensors used in the calculations are declared valid.

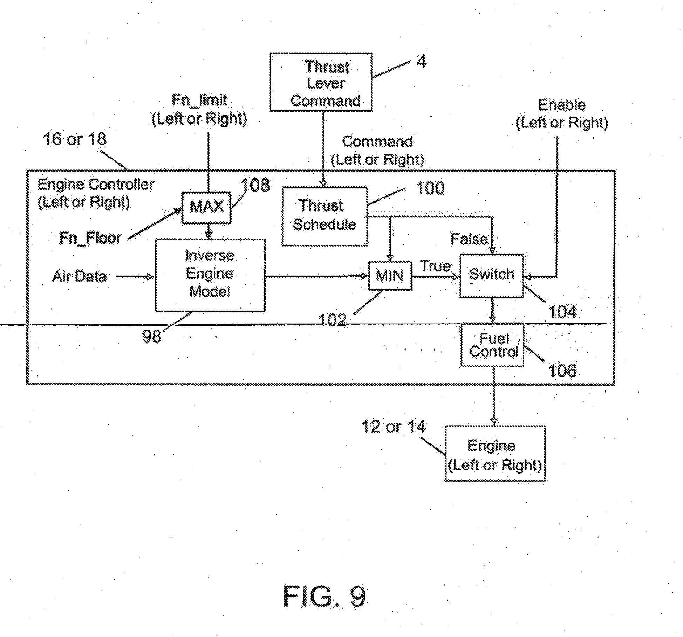

The output of AND function 88 is then applied to AND functions 86 and 90 (along with other signals which are dependent on the output of the thrust asymmetry detection function 22) to create logic signals for each engine: AND function 90 outputs the state of Enable_Left, whereas AND function 86 outputs the state of. Enable_Right. For the left engine, Enable_Left is True only if a valid thrust limit is to be applied (i.e., the output of AND function 88 is True) and the thrust asymmetry is causing a yawing moment in the direction to move the nose of the airplane to the right (i.e., the output of monitoring function 82 is True, meaning that CnT > 0). For the right engine, Enable_Right is True only if a valid thrust limit is to be applied (i.e., the output of AND function 88 is True) and the thrust asymmetry is causing a yawing moment in the direction to move the nose of the airplane to the left (i.e., the output of monitoring function 82 is False, so that the output of the NOT function 84 is True). The outputs Enable_Left and Enable_Right are received by the left and right engine thrust limits function 26. [FIG. 8 does not show that the outputs Enable_Left and Enable_Right are also received by the respective engine controller, as seen in FIG. 9.]

Still referring to FIG. 8, the left and right engine thrust limits function 26 causes the thrust limit to be applied, as appropriate, to separate thrust limit signals (Fn_Limit_Left and Fn_Limit_Right) for each engine. The function causes the thrust limit to be applied to an engine thrust limit signal only when the enable signal for that engine is True. When the enable signal for an engine is False, the value Fn_maximum is applied to the engine thrust limit signal. The switch function 94 routes the input marked "True" to its output when the Enable_Left flag is True and routes the input marked "False" to its output when the Enable_Left flag is False. Similarly, the switch function 96 routes the input marked "True" to its output when the Enable_Right flag is True and routes the input marked "False" to its output when the Enable_Right flag is False.

Referring to FIG. 9, a respective engine controller (16 or 18) receives the thrust limit and enable signal corresponding to the engine location, left or right (12 or 14 respectively). In one advantageous embodiment, the engine controller compares the thrust limit to a predetermined minimum expected limit (Fn_Floor), and selects the higher of the thrust limit (Fn_limit) and the predetermined floor in maximum selection block 108. The inverse engine model function 98 uses the thrust limit Fn_limit and available air data information (e.g., Mach, temperature and altitude) to calculate the value of the thrust control parameter that will cause the engine to produce a thrust equal to the thrust limit. The thrust control parameter is the measurable quantity that the engine controller uses as the command to set the thrust of the engine. It may be used as a feedback to the engine controller in a closed loop control system for setting engine thrust. Examples of thrust control parameters for turbo-fan engines are fan rotor speed and engine pressure ratio. It is a known practice to create a model of engine thrust that relates air data and the thrust control parameter to engine thrust. Usually these models have the thrust control parameter as an independent parameter and engine thrust as the dependent parameter. This inverse engine model reverses that, with engine thrust as an independent parameter and the thrust control parameter as the-dependent parameter.

Each engine controller also receives a respective thrust lever command 4. This command may be due to the pilot interaction with the respective thrust lever or the command from an autothrottle system. Each engine controller uses a thrust lever schedule 100 to convert the respective thrust lever command to a command in the units of the thrust control parameter.

The thrust control parameter values from the thrust schedule and the inverse engine model are compared by a minimum function 102 and the lesser of the two values is passed to the output. This means that the output has the value that was derived from the thrust lever command provided it does not exceed the value derived from the thrust limit. Finally, the switch function 104 selects between the output of the thrust schedule 100 and the output of the minimum function 102. When the enable signal for a given engine is True, the thrust schedule output, as limited by the signal derived from the thrust limit, is sent as the output of the switch function 104. When the enable signal is False, the unlimited output of the thrust schedule is sent as the output.

The existing fuel controller function 106 responds to the thrust control parameter that it receives to control the engine to produce the engine thrust that is commanded.

In summary, the method of limiting thrust produced by an engine of a multi-engine airplane operating with thrust asymmetry in accordance with the above-disclosed embodiment comprises: (a) calculating first, second and third thrust limit schedules for the engine based at least on information about the flight phase, flap position and weight of the airplane; (b) determining successive first engine thrust limits over time as a function of the first thrust limit schedule and a variable dynamic pressure; estimating successive yawing moment coefficients due to a variable thrust asymmetry; (c) determining successive second engine thrust limits over time as a function of at least the second thrust limit schedule and absolute values of the successive estimated yawing moment coefficients; (d) determining successive third engine thrust limits over time as a function of at least the third thrust limit schedule and the absolute values of the successive estimated yawing moment coefficients; (e) for each successive set of first, second and third engine thrust limits corresponding to a respective time, selecting the one of the first, second and third engine thrust limits having a middle value, thereby producing successive selected engine thrust limits; and (f) controlling the engine so that the thrust produced by the engine does not exceed successive applied engine thrust limits derived from the successive selected engine thrust limits.

In addition, the system for limiting thrust produced by an engine of a multi-engine airplane operating with thrust asymmetry in accordance with the above-disclosed embodiment comprises a computer system and an engine controller, wherein the computer system is programmed to execute the following operations: calculating first, second and third thrust limit schedules for the engine based at least on information about the flight phase, flap position and weight of the airplane; determining successive first engine thrust limits over time as a function of the first thrust limit schedule and a variable dynamic pressure; estimating successive yawing moment coefficients due to a variable thrust asymmetry; determining successive second engine thrust limits over time as a function of at least the second thrust limit schedule and absolute values of the successive estimated yawing moment coefficients; determining successive third engine thrust limits over time as a function of at least the third thrust limit schedule and the absolute values of the successive estimated yawing moment coefficients; and for each successive set of first, second and third engine thrust limits corresponding to a respective time, selecting the one of the first, second and third engine thrust limits having a middle value, thereby producing successive selected engine thrust limits, and wherein the engine controller is programmed to control the engine so that the thrust produced by the engine does not exceed successive applied engine thrust limits derived from the successive selected engine thrust limits.

In various embodiments, the engines may be mounted and operated in such a manner that they produce an unequal net thrust, therefore increasing the possibility of the aircraft yawing. As a result of the asymmetric thrust, the aircraft may yaw towards the failed engine. It should be appreciated that asymmetric thrust may be achieved either by operating the two engines at different operational thrust levels, or in an event where one of the engines may have failed or may be malfunctioning. It should also be appreciated that the multi-engine aircraft may include more than two engines, and the engines may be located along various places on the aircraft. As discussed above, it should be clear that the present disclosure may be intended to cover multi-engine aircraft that experience thrust asymmetry, which may include the aircraft having a greater net thrust on one side of the aircraft relative to the other.

It should be appreciated that the logical operations described herein are implemented (1) as a sequence of computer-implemented acts or program modules running on a computer system and/or (2) as interconnected machine logic circuits or circuit modules within the computer system. The implementation is a matter of choice dependent on the performance and other operating parameters of the computer system. Accordingly, the logical operations described herein are referred to variously as operations, structural devices, functions or blocks. These operations, structural devices, functions or blocks may be implemented in software, in hardware, in firmware, in special- purpose digital logic, or any combination thereof. It should also be appreciated that more or fewer operations may be performed than shown in the drawings and described herein. These operations may also be performed in parallel, or in a different order than those described herein.

While the invention has been described with reference to various embodiments, it will be understood by those skilled in the art that various changes may be made and equivalents may be substituted for elements thereof without departing from the scope of the invention as defined by the appended claims. In addiction, many modifications may be made to adapt a particular situation to the teachings of the invention without departing from the essential scope thereof. Therefore it is intended that the invention not be limited to the particular embodiment disclosed as the best mode contemplated for carrying out this invention.

As used in the claims, the term "computer system" should be construed broadly to encompass a system which has at least one computer or processor, and may have two or more computers or processors.

**APPENDIX**

To calculate the yawing moment coefficient, the measured yaw acceleration can be converted into the total airplane yawing moment coefficient. To do this, two generally known equations are used. The first relates yaw acceleration $\dot{r}$ to total airplane yawing moment $N$ and airplane yaw moment of inertia $I_{ZZ}$:

$$\dot{r} = N \cdot I_{zz}$$

Yaw acceleration is approximated by passing the measured airplane yaw rate through a washout filter and additional filtering to reduce signal noise. Airplane yaw moment of inertia may be approximated as being a function of airplane weight. Airplane weight is a quantity that may be obtained as a signal from existing airplane systems. From this information, total airplane yawing moment $N$ can be calculated.

The second equation converts dimensional yawing moment into a yawing moment coefficient:

$$C_n = \frac{N}{\overline{q} \cdot S \cdot b}$$

where dynamic pressure $\bar{q}$ is known from airplane air data systems and the values of wing area S and wing span b are known constants for the airplane. This calculates the total airplane yawing moment coefficient. It is the sum of all yawing moments acting on the airplane, including that from aerodynamics and propulsion systems.

A model of the aerodynamic yawing moment coefficient is then used to estimate the component of total airplane yawing moment coefficient that is generated by aerodynamic forces. This may include contributions such as yawing moment due to rudder deflection, airplane sideslip angle, airplane angular rates (roll rate, yaw rate), and lateral control deflection. It is common practice in the industry to generate and use models of airplane aerodynamic forces and moments across the flight envelope and range of configurations of the airplane. This model may be simplified and tailored to the flight conditions and airplane configurations for which the airplane could be flying near its control limitations with a thrust asymmetry.

The aerodynamic yawing moment coefficient is processed through a simple delay matching filter so that the output signal has the same total time delay as the total airplane yawing moment coefficient calculated from yaw acceleration. This filter is used on this signal when the total time delay of the input signals and computation are less than the time delays of the input signals, filtering and calculation of the total airplane yawing moment coefficient signal.

The thrust asymmetry yawing moment coefficient can then be calculated by subtracting the aerodynamic effects from the total airplane yawing moment. This calculation uses the assumption that the airplane engines and the modeled aerodynamics are the only sources of total airplane yawing moment. The simplified equation for total airplane yawing moment and the equation for the thrust asymmetry yawing moment coefficient are as follows:

$$N_{total} = N_{Aero} + N_{Thrust}$$

$$C_{n_{Thrust}} = C_{n_{Total}} - C_{n_{Aero}}$$

## Claims

1. A method of limiting thrust produced by an engine of a multi-engine airplane operating with thrust asymmetry, comprising:

   calculating first, second and third thrust limit schedules for the engine based at least on information about the flight phase, flap position and weight of the airplane;
   determining successive first engine thrust limits over time as a function of said first thrust limit schedule and a variable dynamic pressure;
   estimating successive yawing moment coefficients due to a variable thrust asymmetry;
   determining successive second engine thrust limits over time as a function of at least said second thrust limit schedule and absolute values of said successive estimated yawing moment coefficients;
   determining successive third engine thrust limits over time as a function of at least said third thrust limit schedule and said absolute values of said successive estimated yawing moment coefficients;
   for each successive set of first, second and third engine thrust limits corresponding to a respective time, selecting the one of said first, second and third engine thrust limits having a middle value, thereby producing successive selected engine thrust limits; and
   controlling the engine so that the thrust produced by the engine does not exceed successive applied engine thrust limits derived from said successive selected engine thrust limits.

2. The method as recited in claim 1, wherein said first engine thrust limits are selected for engine failure conditions that produce a thrust asymmetry in a range, said second engine thrust limits are selected for a transition from a condition where neither engine has thrust limited to the condition where one engine is failed and the other engine thrust is limited, and said third engine thrust limits are selected for engine failure conditions that produce a thrust asymmetry greater than an upper limit of said range.

3. The method as recited in claim 1, further comprising passing said successive selected engine thrust limits subject to upper and lower limits, said upper limit being a value that slightly exceeds a thrust capability of the engine, and said lower limit being a minimum value that is needed to provide the desired control capability, the result of said passing step being an output signal representing successive unfiltered engine thrust limits.

4. The method as recited in claim 1, wherein said calculating said first thrust limit schedule comprises:

(a) calculating values of lift and yawing moment coefficients as a function of at least airplane flap position and flight phase information; and
(b) calculating a dynamic pressure as a function of at least a lift coefficient value calculated in step (a) and a weight of the airplane.

5. The method as recited in claim 1, wherein said calculating said second and third thrust limit schedule comprises estimating a yawing moment coefficient due to asymmetric thrust.

6. The method as recited in claim 1, wherein said controlling the engine comprises calculating values of a thrust control parameter that will cause the engine to produce thrusts equal to said selected engine thrust limits using air data information.

7. The method as recited in claim 1, comprising computing logic signals that control the engine to produce thrust no greater than said selected engine thrust limits when said selected thrust limits are less than the engine's thrust capability, said airplane is in the air and the sensors used to provide data for calculations are declared valid.

8. A system for limiting thrust produced by an engine of a multi-engine airplane operating with thrust asymmetry, comprising: a computer system and an engine controller, wherein said computer system is programmed to execute the following operations:

calculating first, second and third thrust limit schedules for the engine based at least on information about the flight phase, flap position and weight of the airplane;
determining successive first engine thrust limits over time as a function of said first thrust limit schedule and a variable dynamic pressure;
estimating successive yawing moment coefficients due to a variable thrust asymmetry;
determining successive second engine thrust limits over time as a function of at least said second thrust limit schedule and absolute values of said successive estimated yawing moment coefficients;
determining successive third engine thrust limits over time as a function of at least said third thrust limit schedule and said absolute values of said successive estimated yawing moment coefficients; and
for each successive set of first, second and third engine thrust limits corresponding to a respective time, selecting the one of said first, second and third engine thrust limits having a middle value, thereby producing successive selected engine thrust limits, and
wherein said engine controller is programmed to control the engine so that the thrust produced by the engine does not exceed successive applied engine thrust limits derived from said successive selected engine thrust limits.

9. The system as recited in claim 8, wherein said first engine thrust limits are selected for engine failure conditions that produce a thrust asymmetry in a range, said second engine thrust limits are selected for a transition from a condition where neither engine has thrust limited to the condition where one engine is failed and the other engine thrust is limited, and said third engine thrust limits are selected for engine failure conditions that produce a thrust asymmetry greater than an upper limit of said range.

10. The system as recited in claim 8, wherein said computer system is further programmed to pass said successive selected engine thrust limits subject to upper and lower limits, said upper limit being a value that slightly exceeds a thrust capability of the engine, and said lower limit being a minimum value that is needed to provide the desired control capability, the result of said passing step being an output signal representing successive unfiltered engine thrust limits.

11. The system as recited in claim 8, wherein said calculating said first thrust limit schedule comprises:

(a) calculating values of lift and yawing moment coefficients as a function of at least airplane flap position and flight phase information; and
(b) calculating a dynamic pressure as a function of at least a lift coefficient value calculated in step (a) and a weight of the airplane.

12. The system as recited in claim 8, wherein said calculating said second and third thrust limit schedule comprises estimating a yawing moment coefficient due to asymmetric thrust.

**13.** The system as recited in claim 8, wherein said controlling the engine comprises calculating values of a thrust control parameter that will cause the engine to produce thrusts equal to said selected engine thrust limits using air data information.

**14.** The system as recited in claim 8, wherein said computer system is further programmed to compute logic signals that control the engine to produce thrust no greater than said selected engine thrust limits when said selected thrust limits are less than the engine's thrust capability, said airplane, is in the air and the sensors used to provide data for calculations are declared valid.

**Patentansprüche**

**1.** Verfahren zum Begrenzen des Schubs, der durch ein Triebwerk eines Mehr-Triebwerk-Flugzeugs erzeugt wird, das mit einer Schubasymmetrie operiert, mit den folgenden Schritten:

Berechnen von einem ersten, einem zweiten und einem dritten Schubbegrenzungsplan für das Triebwerk basierend zumindest auf Information über die Flugphase, Klappenposition und Gewicht des Flugzeugs;
Bestimmen sukzessiver erster Triebwerksschubbegrenzungen über die Zeit als Funktion des ersten Schubbegrenzungsplans und eines variablen dynamischen Drucks,
Abschätzen sukzessiver Giermomentkoeffizienten aufgrund einer variablen Schubasymmetrie;
Bestimmen sukzessiver zweiter Triebwerksschubbegrenzungen über die Zeit als eine Funktion von zumindest dem zweiten Schubbegrenzungsplan und absoluten Werten der sukzessiven geschätzten Giermomentkoeffizienten;
Bestimmen sukzessiver dritter Triebwerksschubbegrenzungen über die Zeit als eine Funktion von zumindest dem dritten Schubbegrenzungsplan und den absoluten Werten der sukzessiven geschätzten Giermomentkoeffizienten;
Auswählen, für jeden sukzessiven Satz von ersten, zweiten und dritten Triebwerksschubbegrenzungen entsprechend einer jeweiligen Zeit, den einen von den ersten, den zweiten und den dritten Triebwerksschubbegrenzungen, der einen mittleren Wert aufweist, wodurch sukzessive ausgewählte Triebwerksschubbegrenzungen erzeugt werden; und
Steuern des Triebwerks, so dass der durch das Triebwerk erzeugte Schub nicht sukzessive beaufschlagte Triebwerksschubbegrenzungen übersteigt, die von den sukzessive ausgewählten Triebwerksschubbegrenzungen abgeleitet sind.

**2.** Verfahren nach Anspruch 1, wobei die ersten Triebwerksschubbegrenzungen für Triebwerksfehlbedingungen ausgewählt sind, die eine Schubasymmetrie in einem Bereich erzeugen, wobei die zweiten Triebwerksschubbegrenzungen ausgewählt sind für einen Übergang von einem Zustand, in dem keines der Triebwerke einen begrenzten Schub aufweist zu der Bedingung, in der ein Triebwerk ausgefallen ist und der andere Triebwerksschub begrenzt ist, und wobei die dritten Triebwerksschubbegrenzungen ausgewählt sind für Triebwerksausfallbedingungen, die eine Schubasymmetrie erzeugen, die größer als eine obere Grenze des Bereichs sind.

**3.** Verfahren nach Anspruch 1, des Weiteren mit dem Schritt des Weiterleitens der sukzessiven ausgewählten Triebwerksschubbegrenzungen unter Beaufschlagung von einer oberen und einer unteren Grenze, wobei die obere Grenze ein Wert ist, der eine Schubfähigkeit des Triebwerks leicht übersteigt, und wobei die untere Grenze ein Minimalwert ist, der zum Bereitstellen der gewünschten Steuerfähigkeit benötigt ist, wobei das Ergebnis des Schritts des Weiterleitens ein Ausgabesignal ist, das sukzessive ungefilterte Triebwerksschubbegrenzungen repräsentiert.

**4.** Verfahren nach Anspruch 1, wobei das Berechnen des ersten Schubbegrenzungsplans die folgenden Schritte aufweist:

(a) Berechnen von Werten von Auftriebs- und Giermomentkoeffizienten als eine Funktion von zumindest einer Flugzeugklappenposition und Flugphaseninformation; und
(b) Berechnen eines dynamischen Drucks als eine Funktion von zumindest einem Auftriebskoeffizientenwerts, der in Schritt (a) berechnet ist, und einem Gewichts des Flugzeugs.

**5.** Verfahren nach Anspruch 1, wobei das Berechnen des zweiten und des dritten Schubbegrenzungsplans das Abschätzen eines Giermomentkoeffizienten aufgrund von asymmetrischem Schub aufweist.

6. Verfahren nach Anspruch 1, wobei das Steuern des Triebwerks das Berechnen von Werten eines Schubsteuerungsparameters aufweist, der bewirken wird, dass das Triebwerk Schübe erzeugt, die gleich den ausgewählten Triebwerksschubbegrenzungen sind unter Nutzung von Luftdateninformation.

7. Verfahren nach Anspruch 1, des Weiteren mit dem Schritt des Berechnens von Logiksignalen, die das Triebwerk dazu steuern, einen Schub zu erzeugen, der nicht größer als die ausgewählten Triebwerksschubbegrenzungen ist, wenn die ausgewählten Triebwerksschubbegrenzungen geringer sind als die Schubfähigkeit des Triebwerks, wobei das Flugzeug in der Luft ist und die Sensoren, die dazu genutzt werden, Daten bereitzustellen für Berechnungen, als valide bezeichnet sind.

8. System zum Begrenzen des Schubs, der durch ein Triebwerk eines Mehr-Triebwerk-Flugzeugs erzeugt ist, das mit Schubasymmetrie operiert, mit: einem Computersystem und einer Triebwerkssteuerung, wobei das Computersystem dazu programmiert ist, die folgenden Vorgänge auszuführen:

Berechnen von einem ersten, einem zweiten und einem dritten Schubbegrenzungsplan für das Triebwerk basierend zumindest auf Information über die Flugphase, Klappenposition und Gewicht des Flugzeugs;
Bestimmen sukzessiver erster Triebwerksschubbegrenzungen über die Zeit als Funktion des ersten Schubbegrenzungsplans und eines variablen dynamischen Drucks,
Abschätzen sukzessiver Giermomentkoeffizienten aufgrund einer variablen Schubasymmetrie;
Bestimmen sukzessiver zweiter Triebwerksschubbegrenzungen über die Zeit als eine Funktion von zumindest dem zweiten Schubbegrenzungsplan und absoluten Werten der sukzessiven geschätzten Giermomentkoeffizienten;
Bestimmen sukzessiver dritter Triebwerksschubbegrenzungen über die Zeit als eine Funktion von zumindest dem dritten Schubbegrenzungsplan und den absoluten Werten der sukzessiven geschätzten Giermomentkoeffizienten;
Auswählen, für jeden sukzessiven Satz von ersten, zweiten und dritten Triebwerksschubbegrenzungen entsprechend einer jeweiligen Zeit, den einen von den ersten, den zweiten und den dritten Triebwerksschubbegrenzungen, der einen mittleren Wert aufweist, wodurch sukzessive ausgewählte Triebwerksschubbegrenzungen erzeugt werden; und
wobei die Triebwerkssteuerung dazu programmiert ist, das Triebwerk zu steuern, so dass der durch das Triebwerk erzeugte Schub sukzessive beaufschlagte Triebwerksschubbegrenzungen nicht übersteigt, die von den sukzessiven ausgewählten Triebwerksschubbegrenzungen abgeleitet sind.

9. System nach Anspruch 8, wobei die ersten Triebwerksschubbegrenzungen für Triebwerksausfallbedingungen ausgewählt sind, die eine Schubasymmetrie in einem Bereich erzeugen, wobei die zweiten Triebwerksschubbegrenzungen ausgewählt sind für einen Übergang von einem Zustand, in dem kein Triebwerk einen begrenzten Schub aufweist, zu dem Zustand, in dem ein Triebwerk ausgefallen ist und das andere Triebwerk einen begrenzten Schub aufweist, und die dritten Triebwerksschubbegrenzungen für Triebwerksausfallbedingungen ausgewählt sind, die eine Schubasymmetrie erzeugen, die größer als eine obere Grenze des Bereichs ist.

10. System nach Anspruch 8, wobei das Computersystem des Weiteren dazu programmiert ist, die sukzessiven ausgewählten Triebwerksschubbegrenzungen unter Beaufschlagung einer oberen und einer unteren Grenze weiterzuleiten, wobei die obere Grenze ein Wert ist, der eine Schubfähigkeit des Triebwerks leicht übersteigt, und wobei die untere Grenze ein Minimumwert ist, der zum Bereitstellen der gewünschten Steuerungsfähigkeit benötigt ist, wobei das Ergebnis des Weiterleitungsschritts ein Ausgabesignal ist, das sukzessive ungefilterte Triebwerksschubbegrenzungen repräsentiert.

11. System nach Anspruch 8, wobei das Berechnen des ersten Schubbegrenzungsplans Folgendes aufweist:

(a) Berechnen von Werten von Auftriebs- und Giermomentkoeffizienten als eine Funktion von zumindest einer Flugzeugklappenposition und Flugphaseninformation; und
(b) Berechnen eines dynamischen Drucks als eine Funktion von zumindest einem Auftriebskoeffizientenwerts, der in Schritt (a) berechnet ist, und einem Gewichts des Flugzeugs.

12. System nach Anspruch 8, wobei das Berechnen des zweiten und des dritten Schubbegrenzungsplans das Abschätzen eines Giermomentkoeffizienten aufgrund von asymmetrischem Schub aufweist.

**13.** System nach Anspruch 8, wobei das Steuern des Triebwerks das Berechnen von Werten eines Schubsteuerungsparameters aufweist, der bewirken wird, dass das Triebwerk einen Schub erzeugt, der gleich den ausgewählten Triebwerksschubbegrenzungen ist unter Nutzung von Luftdateninformationen.

**14.** System nach Anspruch 8, wobei das Computersystem des Weiteren dazu programmiert ist, Logiksignale zu berechnen, die das Triebwerk steuern, einen Schub zu erzeugen, der nicht größer als die ausgewählten Triebwerksschubbegrenzungen ist, wenn die ausgewählten Schubbegrenzungen geringer als die Schubfähigkeit des Triebwerks sind, das Flugzeug in der Luft ist und die Sensoren, die zum Bereitstellen der Daten für die Berechnungen genutzt werden, als valide bezeichnet sind.

**Revendications**

**1.** Procédé de limitation de la poussée produite par un moteur d'un avion multimoteur fonctionnant avec une asymétrie de poussée, comprenant:

le calcul d'une première, d'une deuxième et d'une troisième liste de limites de poussée pour le moteur en se basant au moins sur des informations sur la phase de vol, la position des volets et le poids de l'avion,
la détermination des premières limites de poussée du moteur successives dans le temps en fonction de ladite première liste de limites de poussée et d'une pression dynamique variable ;
l'estimation des coefficients successifs de moment de lacet dus à une asymétrie de poussée variable ;
la détermination de deuxièmes limites de poussée du moteur successives dans le temps en fonction d'au moins ladite deuxième liste de limites de poussée et de valeurs absolues desdits coefficients de moment de lacet estimés successifs ;
la détermination de troisièmes limites de poussée du moteur successives en fonction d'au moins ladite troisième liste de limites de poussée et desdites valeurs absolues desdits coefficients de moment de lacet estimés successifs ;
pour chaque premier ensemble successif de premières, deuxièmes et troisièmes limites de poussée correspondant à un temps respectif, la sélection de celle desdites premières, deuxièmes et troisièmes limites de poussée du moteur ayant une valeur moyenne, produisant ainsi des limites de poussée du moteur sélectionnées successives ; et
la commande du moteur de manière à ce que la poussée produite par le moteur ne dépasse pas les limites de poussée du moteur appliquées successives obtenues à partir desdites limites de poussée du moteur sélectionnées successives.

**2.** Procédé selon la revendication 1, dans lequel lesdites premières limites de poussée du moteur sont sélectionnées pour des conditions de panne de moteur qui produisent une asymétrie de poussée dans une plage, lesdites deuxièmes limites de poussée du moteur sont sélectionnées pour une transition depuis une condition dans laquelle aucun des deux moteurs n'a sa poussée limitée à une condition dans laquelle un moteur est en panne et la poussée de l'autre moteur est limitée, et lesdites troisièmes limites de poussée du moteur sont sélectionnées pour des conditions de panne de moteur qui produisent une asymétrique de poussée plus grande qu'une limite supérieure de ladite plage.

**3.** Procédé selon la revendication 1, comprenant en outre la transmission desdites limites de poussée du moteur sélectionnées successives sous réserve de limites supérieure et inférieure, ladite limite supérieure étant une valeur qui dépasse légèrement une capacité de poussée du moteur, et ladite limite inférieure étant une valeur minimum qui est nécessaire pour fournir la capacité de commande désirée, le résultat de ladite étape de transmission étant un signal de sortie représentant les limites de poussée du moteur non filtrées successives.

**4.** Procédé selon la revendication 1, dans lequel ledit calcul de ladite première liste de limites de poussée comprend :

(a) le calcul des valeurs des coefficients de portance et de moment de lacet en fonction d'au moins des informations sur la position des volets de l'avion et la phase de vol ; et
(b) le calcul d'une pression dynamique en fonction d'au moins une valeur de coefficient de portance calculée lors de l'étape (a) et d'un poids de l'avion.

**5.** Procédé selon la revendication 1, dans lequel ledit calcul desdites deuxième et troisième listes de limites de poussée comprend l'estimation d'un coefficient de moment de lacet dû à la poussée asymétrique.

**6.** Procédé selon la revendication 1, dans lequel ladite commande du moteur comprend le calcul des valeurs d'un paramètre de commande de poussée qui fera produire au moteur des poussées égales auxdites limites de poussée du moteur sélectionnées en utilisant des informations sur les données aérodynamiques.

**7.** Procédé selon la revendication 1, comprenant le calcul de signaux logiques qui commandent le moteur pour produire une poussée pas plus grande que lesdites limites de poussée du moteur sélectionnées lorsque lesdites limites de poussée sélectionnées sont inférieures à la capacité de poussée du moteur, lorsque ledit avion est dans l'air et lorsque les capteurs utilisés pour fournir des données pour les calculs sont déclarés valides.

**8.** Système pour limiter la poussée produite par un moteur d'un avion multimoteur fonctionnant avec une asymétrie de poussée, comprenant: un système informatique et une commande de moteur, ledit système informatique étant programmé de façon à exécuter les opérations suivantes :

le calcul d'une première, d'une deuxième et d'une troisième liste de limites de poussée pour le moteur en se basant au moins sur des informations sur la phase de vol, la position des volets et le poids de l'avion,
la détermination des premières limites de poussée du moteur successives dans le temps en fonction de ladite première liste de limites de poussée et d'une pression dynamique variable ;
l'estimation des coefficients successifs de moment de lacet dus à une asymétrie de poussée variable ;
la détermination de deuxièmes limites de poussée du moteur successives dans le temps en fonction d'au moins ladite deuxième liste de limites de poussée et de valeurs absolues desdits coefficients de moment de lacet estimés successifs ;
la détermination de troisièmes limites de poussée de moteur successives dans le temps en fonction d'au moins ladite troisième liste de limites de poussée et desdites valeurs absolues desdits coefficients de moment de lacet estimés successifs ;
pour chaque premier ensemble successif de premières, deuxièmes et troisièmes limites de poussée correspondant à un temps respectif, la sélection de celle desdites premières, deuxièmes et troisièmes limites de poussée de moteur ayant une valeur moyenne, produisant ainsi des limites de poussée du moteur sélectionnées successives ; et
dans lequel ladite commande du moteur est programmée de manière à commander le moteur afin que la poussée produite par le moteur ne dépasse pas les limites de poussée du moteur appliquées successives obtenues à partir des limites de poussée du moteur sélectionnées successives.

**9.** Système selon la revendication 8, dans lequel lesdites premières limites de poussée du moteur sont sélectionnées pour des conditions de panne du moteur qui produisent une asymétrie de poussée dans une plage, lesdites deuxièmes limites de poussée du moteur sont sélectionnées pour une transition depuis une condition dans laquelle aucun des deux moteurs n'a sa poussée limitée à une condition dans laquelle un moteur est en panne et la poussée de l'autre moteur est limitée, et lesdites troisièmes limites de poussée du moteur sont sélectionnées pour des conditions de panne de moteur qui produisent une asymétrique de poussée plus grande qu'une limite supérieure de ladite plage.

**10.** Système selon la revendication 8, dans lequel ledit système informatique est programmé en outre de façon à transmettre lesdites limites de poussée du moteur sélectionnées successives sous réserve de limites supérieure et inférieure, ladite limite supérieure étant une valeur qui dépasse légèrement une capacité de poussée du moteur, et ladite limite inférieure étant une valeur minimum qui est nécessaire pour fournir la capacité de commande désirée, le résultat de ladite étape de transmission étant un signal de sortie représentant les limites de poussée du moteur non filtrées successives.

**11.** Système selon la revendication 8, dans lequel ledit calcul de ladite première liste de limites de poussée comprend :

(a) le calcul des valeurs des coefficients de portance et de moment de lacet en fonction d'au moins des informations sur la position des volets de l'avion et la phase de vol ; et
(b) le calcul d'une pression dynamique en fonction d'au moins une valeur de coefficient de portance calculée lors de l'étape (a) et d'un poids de l'avion.

**12.** Système selon la revendication 8, dans lequel ledit calcul desdites deuxième et troisième liste de limites de poussée comprend l'estimation d'un coefficient de moment de lacet dû à la poussée asymétrique.

**13.** Système selon la revendication 8, dans lequel ladite commande du moteur comprend le calcul des valeurs d'un paramètre de commande de poussée qui fera produire au moteur des poussées égales auxdites limites de poussée du moteur sélectionnées en utilisant des informations sur les données aérodynamiques.

**14.** Système selon la revendication 8, dans lequel ledit système informatique est programmé en outre de façon à calculer des signaux logiques qui commandent le moteur pour produire une poussée pas plus grande que lesdites limites de poussée du moteur sélectionnées lorsque lesdites limites de poussée sélectionnées sont inférieures à la capacité de poussée du moteur, lorsque ledit avion est dans l'air et lorsque les capteurs utilisés pour fournir des données pour les calculs sont déclarés valides.

Sensor
Data
2
Flight
Condition
Airplane
Configuration
10
Flight Control Computer
20
Thrust Limit
Schedule
22
Thrust
Asymmetry
Detection
24
Left and Right
Engine Enable
Logic
26
Left and Right
Engine Thrust
Limits
Fn_Limit_Left
Fn_Limit_Right
4b
Right
Thrust Lever
Command
Enable_
Left
Enable_
Right
Left
Thrust Lever
Command
Left Engine
Controller
Right Engine
Controller
16
4a
18
12
Left
Engine
14
Right
Engine

FIG. 1

Fn
Point 2
Point 1
qbar
Fn
Point 1
Point 2
Angle of attack
Or CL
Cn
Point 2
Point 1
qbar

FIG. 2A

FIG. 2B

FIG. 2C

Cn
Point 1
Point 2
Angle of attack
Or CL

FIG. 2D

Fn
Cn_estimate

FIG. 2E

Sensor Data
2
Flight Condition
Airplane Configuration
10
Flight Control Computer
Takeoff/ Landing Flight Phase
32
34
30
Thrust Asymmetry Estimate
Q-Based Thrust Limit
Cn, Fn
36
40
Lower Cn Based Thrust Limit
ABS
Thrust Limit Selection
Upper Cn Based Thrust Limit
Fn_qbased_ limit
42
38
24
Filter and Limit
Left and Right Engine Enable Logic
44
Left and Right Engine Thrust Limits
26
4b
Fn_Limit_Left
Fn_Limit_Right
Right Thrust Lever Command
Enable_ Left
Enable_ Right
Left Thrust Lever Command
Left Engine Controller
Right Engine Controller
16
18
4a
12
14
Left Engine
Right Engine


FIG. 3

Takeoff/
Landing
Flight Phase
32
34
q_Based Thrust Limit
50
CL
Tables
Flap
Cn
Tables
CL1, CL2
54
Cn1, Cn2
52
Calculate qbar
Corner Points
Weight
Calculate
Thrust
Corner Points
qbar1, qbar2
56
Fn1, Fn2
Thrust Limit Schedule
58
Cn1
Point 1
Point 2
Fn1
Fn2
qbar
qbar2
qbar1
Fn_qbased_limit

FIG. 4

30
Thrust Asymmetry Estimate
Fn1
Cn1
Fn2
40
Lower Cn Based Thrust Limit
60
Gain, K3
62
0.01
36
ABS
MAX
64
Cn3
Thrust Limit Schedule
Cn3
|CnT|
Fn1
Fn2
66
qbar3
68
Max
Fn_LowerCn_limit

FIG. 5

30
Thrust Asymmetry Estimate
Fn1
Cn2
Fn2
38
Upper Cn Based Thrust Limit
36
62
ABS
0.01
MAX
64
Thrust Limit Schedule
Cn2
|CnT|
Fn1
Fn2
70
qbar4
69
Max
Fn_UpperCn_limit

FIG. 6

Fn_qbased_limit
Fn_cnbased_ll
Fn_cnbased_ul
42
Thrust Limit Selection
Mid Value Selection
72
Selected Fn_limit
44
Filter and Limit
Positive Rate Limit
74
76
78
Fn_minimum
Signal Limiter
Filter
Rate Limiter
Fn_maximum
Negative Rate Limit Selection
80
Fn_limit
Fn_maximum

FIG. 7

22
Thrust Asymmetry Detection
In Air Discrete
Sensor Validity Discrete
24
Left and Right Engine Enable Logic
82
CnT > 0 ?
92
Hysteresis Logic Fn_limit < Fn_maximum ?
AND
88
84
NOT
86
90
AND
AND
Fn_limit
Enable_ Left
Enable_ Right
Fn_maximum
26
Left and Right Engine Thrust Limits
False
True
Switch
96
False
94
True
Switch
Fn_Limit_Left
Fn_Limit_Right

FIG. 8

Thrust
Lever
Command
4
Fn_limit
(Left or Right)
Enable
(Left or Right)
16 or 18
Command
(Left or Right)
Engine Controller
(Left or Right)
MAX
108
Thrust
Schedule
100
Fn_Floor
False
Inverse
Engine
Model
Air Data
MIN
True
Switch
104
102
98
Fuel
Control
106
12 or 14
Engine
(Left or Right)


FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2008243315 A1